# EUROPEAN PATENT APPLICATION

(11) **EP 1 980 312 A2**
(43) Date of publication of application: **15.10.2008**
(21) Application number: 08153713.6
(22) Date of filing: 31.03.2008
(51) Int. Cl.: B01D 53/26, B60T 17/02, F04B 39/16

(54) **Adsorption drying unit with optimised management of the flowrate and/or the regeneration phase and air treatment plant comprising such a unit**

(30) Priority: 03.04.2007 IT TO20070237
(71) Applicant: Faiveley Transport Italia S.p.A., 10045 Piossasco TO (IT)
(72) Inventor: BEACCO, Arnaldo, I-10098 RIVOLI (Torino) (IT); TIONE, Roberto, I-10020 LAURIANO (Torino) (IT); BARBERIS, Dario, I-10137 TORINO (IT)
(74) Representative: Quinterno, Giuseppe

(57) **Abstract**

Adsorption drying unit including an inlet for an air flow supplied from at least one compressed-air source (11), an outlet for connection to a user plant (6), a first drying column or device (1) and a second drying column or device (2) each containing hygroscopic material (3), two main lines (4a,4b) each able to connect a respective drying column (1,2) to the user plant (6) and a secondary line (8) which connects to each other the two main lines (4a,4b) and is provided with flowrate control devices (9). The drying unit also comprises a selector valve (5) able to connect alternately one of the said main lines (4a,4b) to the user plant (6); and an intake and discharge valve unit (12a, 12b, 14a, 14b) able to charge and discharge the two drying columns (1,2), connecting them alternately (1,2) to the source (11) or to the external atmosphere. The drying unit is also characterized in that it also comprises a humidity transducer (15) able to detect the humidity of the air entering the user plant (6) and emit a signal indicating this humidity, a control unit (16) designed to manage, on the basis of the signal emitted by the humidity transducer (15), the intake and discharge valve unit (12a, 12b, 14a, 14b) so as to switch the drying unit from a first operating condition into the second operating condition and vice versa.

## Description

The present invention relates to an adsorption drier for compressed air.

More specifically the invention relates to an adsorption drier which is able to manage in an optimised manner the regeneration of the hygroscopic material used.

Compressed-air driers operate making use of the adsorbent properties of hygroscopic substances which absorb the moisture from the air passing through it. When the hygroscopic material is saturated with moisture and is not able to remove any more moisture from the air it must undergo a regeneration phase; during this phase the moisture is removed from the hygroscopic material by blowing dry air through it.

In known driers regeneration is performed at fixed and predetermined time intervals, irrespective of the real operation conditions. This does not allow said regeneration to be adapted to the actual requirements of the system with the risk that all the necessary moisture may not be removed from the hygroscopic material or on the other hand regeneration being performed for a longer than necessary time.

One object of the present invention is to propose an innovative compressed-air drier which is able to adapt regeneration to the real operating condition of the system.

These and other objects are achieved according to the invention with a drier, whose main characteristics are defined in Claim 1.

Further characteristics and advantages of the invention will become clear from the following detailed description provided purely by way of non-limiting example, with reference to the accompanying drawings in which:
Figure 1 is a schematic representation of a drying unit according to the invention;
Figure 2 is a schematic representation of a variant of the drying unit according to the invention;
Figure 3 is a schematic representation of another variant of the drying unit according to the invention;
Figure 4 is a schematic representation of an air treatment plant comprising the variant according to Figure 2 of the drying unit according to the invention;
Figure 5 is a perspective view of the air treatment plant according to the invention; and
Figure 6 is a block diagram of the predictive diagnostic system of the air treatment plant according to the invention.

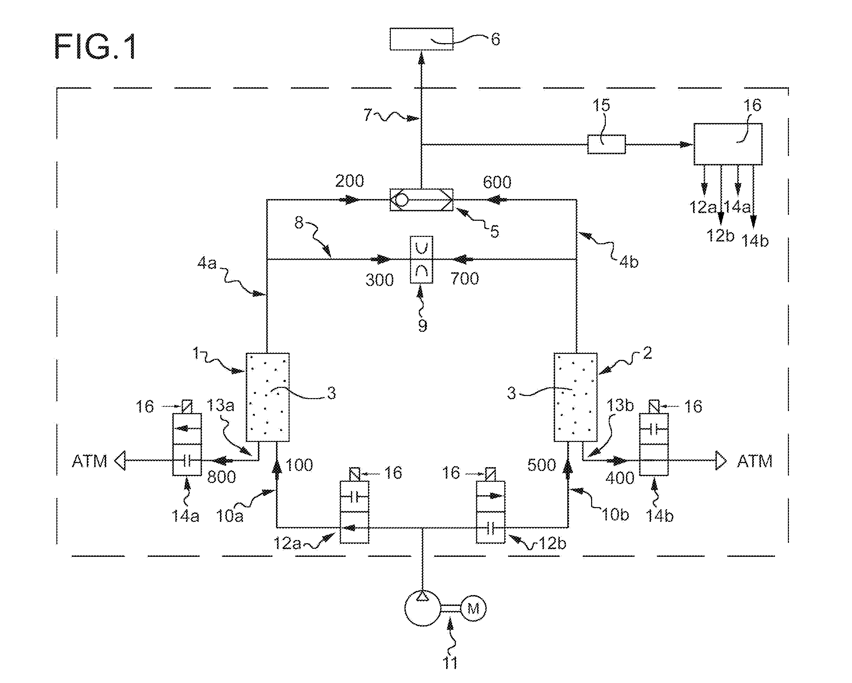

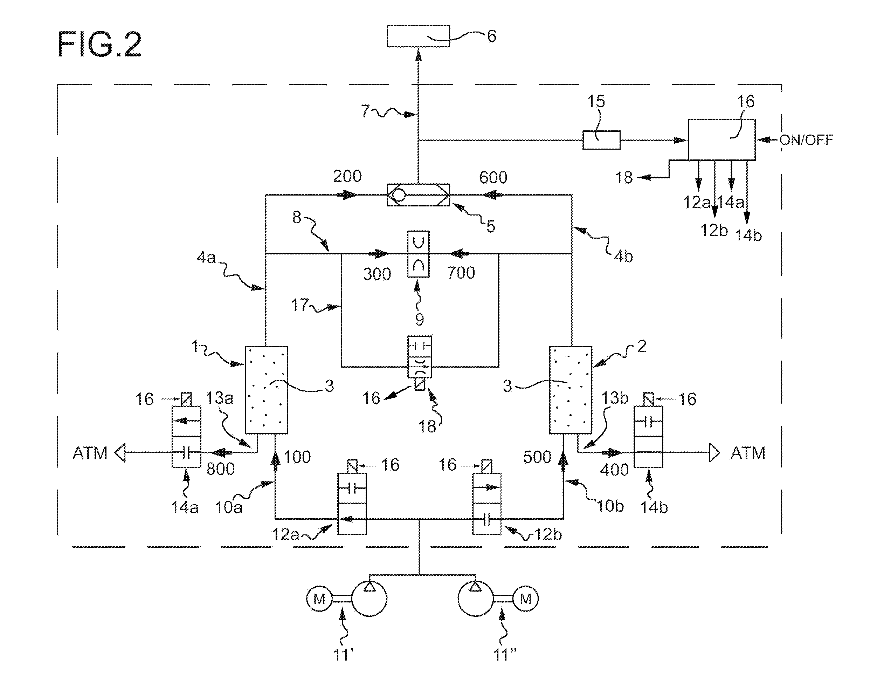

In Figure 1, 1 and 2 denote, respectively, a first and a second drying device or column containing hygroscopic material 3. Two main lines 4a and 4b extend from the columns 1 and 2. These lines 4a and 4b are interconnected by means of a pneumatic selector valve 5 able to connect them alternately to a user plant 6 by means of an outlet line 7.

The two main lines 4a and 4b are also connected to each other by a secondary line 8 on which a throttle device 9 is arranged.

In a variant not shown in the drawings, the selector valve 5 and the throttle device 9 may be incorporated in a single valve device in a manner known per se.

The columns 1 and 2 are connected by two respective lines 10a and 10b to a compressed-air source, in particular a compressor 11. Two intake electro-valves 12a and 12b are situated along the two lines 10a and 10b and are able to open or close the respective lines 10a and 10b in relation to the compressed air flow from the compressor 11.

The columns 1 and 2 are also provided with two outlet lines 13a and 13b which are able to connect said columns 1 and 2 to the surrounding atmosphere by means of respective discharge electro-valves 14a and 14b.

In a first operating condition, to which Figure 1 refers, the first column 1 is in drying mode and is passed through by a moist air flow supplied from the compressor 11 and passing through the intake electro-valve 12a in the open position. This air is directed upwards in the direction of the arrow 100 and emerges, dried, inside the main line 4a. The intake electro-valve 12b is closed, thus preventing the flow of air from the compressor 11 to the column 2.

The air dried by the line 4a continues partly in the direction of the arrow 200 towards the outlet line 7 and the user plant 6, passing through the selector valve 5 which is opened in this direction by the air pressure.

Another part of the dried air is instead conveyed, via the secondary line 8 and the main line 4b, towards the column 2, as indicated by the arrow 300. The throttle device 9 has the function of limiting the quantity of dried air which passes through the secondary line 8 and which is used for regeneration prior to being dispersed in the atmosphere. The dried air thus reaching the line 4b enters entirely into the second column 2 since the reverse path along the same line 4b is prevented by the selector valve 5. The air entering into the second column 2 performs regeneration of the column itself, removing the water molecules present in the hygroscopic material 3 contained therein following a prior working stage. Finally it emerges from the second column 2 as indicated by the arrow 400 and, via the discharge electro-valve 14b, is discharged into the external atmosphere.

The drying unit according to the invention is also provided with a humidity transducer 15 on the outlet line 7. This transducer 15 detects the humidity of the air entering the user plant 6 and sends this information to a control unit 16 which compares it with a predetermined value identifying the degree of saturation reached by the column 1 during drying. When the humidity measured exceeds this predetermined value, the control unit 16 causes switching of the intake and discharge electro-valves 12a, 12b, 14a and 14b, so that the system assumes a second operating condition (not illustrated in the drawings).

In this second operating condition the second column 2 is now in drying mode and is passed through by a flow of moist air supplied from the compressor 11 and passing through the intake electro-valve 12b which allows a through-flow. This air is directed upwards in the direction of the arrow 500 and emerges, dried, inside the main line 4b. The intake electro-valve 12a is closed, thus preventing the flow of air from the compressor 11 to the column 1.

The air dried by the line 4b continues partly in the direction of the arrow 600 towards the outlet line 7 and the plant 6, passing through the selector valve 5 which is now opened in this direction by the air pressure.

Another part of the dried air is instead conveyed, via the secondary line 8 and the main line 4a, towards the column 1, as indicated by the arrow 700. The dried air enters at this point entirely into the first column 1 since the reverse path along the line 4a itself is prevented by the selector valve 5. The air entering into the first column 1 performs regeneration of the column itself and finally emerges from this column as indicated by the arrow 800 and, via the discharge electro-valve 14a, is discharged into the external atmosphere.

When the humidity transducer 15 detects a humidity level of the air leaving the drier which is too high, the system is switched again into the first operating condition and the cycle is resumed as described above.

The management of the regeneration/drying times is therefore not fixed, but is performed in a variable manner at intervals depending on the real performance measured by the humidity transducer 15.

In the configuration according to Figure 1 described above the flowrate of regeneration air is determined by the conditions of the fluid at the terminal points of the throttle device 9 and by the through-flow cross-section of the throttle device 9, which is constant.

This means that, when there is a more or less important variation in the incoming flowrate, the percentage of regeneration air is solely dependent upon the conditions of the fluid at the terminal points of the throttle device 9, which cannot be controlled. Assuming that there is an incoming air flow variable between a minimum and maximum value, the flow of regeneration air could therefore be excessive or insufficient.

For this reason the variant according to Figure 2 has been created, with the addition of a third line 17, arranged parallel to the secondary line 8 and provided with an auxiliary electro-valve 18 which is opened or closed by the control unit 16 on the basis of data representing the rate of flow of incoming moist air, as described hereinbelow.

The drying unit according to Figure 2 has two compressors 11' and 11", which may be activated individually or simultaneously. The control unit 16 is designed to receive at its input an ON/OFF signal indicating how many compressors 11' and 11" are active in a given moment. If a single compressor 11' or 11" is active, the control unit 16 causes the auxiliary electro-valve 18 to close so that the regeneration flow is only that passing through the secondary line 8.

On the other hand, if both the compressors 11' and 11" are active, the flow of incoming dried air is greater and the control unit 16 causes opening of the auxiliary electro-valve 18. In this way, the regeneration flow increases proportionally with respect to the increase in the through-flow cross-sections (sum of the cross-sections of the secondary line 8 and the third line 17).

This occurs because an increase in the incoming flowrate means that the drying column which is subject to the through-flow of moist air will be saturated with moisture more rapidly than in the case where only one compressor 11' or 11" is active. This results in switching between the drying stage and the regeneration stage which is faster than in the case shown in Figure 1. When the saturated column is being regenerated, if the regeneration flowrate should not vary proportionally with respect to the flowrate produced by the compressed-air source, it would not be possible to eliminate all the moisture contained in it since the duration of this stage is reduced following the faster switching between the drying/regeneration phases. In order to obtain, therefore, correct elimination of moisture from the column, the regeneration flowrate is therefore increased with the aid of the third line 17.

The control unit 16 may also control the auxiliary electro-valve 18 on the basis of the humidity signal supplied by the humidity transducer 15. Let us assume that a too sudden increase in the humidity of the air entering the user plant 6 is detected. By knowing the state of the intake and discharge electro-valves 12a, 12b, 14a and 14b it is possible to determine which column is in drying mode and it is possible to attribute the increase in humidity to the fact that this column has not been regenerated sufficiently during the previous cycle and therefore has a reduced operating efficiency. As a result of this measurement it is possible to detect the malfunction and conduct management of the auxiliary electro-valve 18 with the aim of re-balancing the regenerative capacity of the two columns.

This means that, in response to a variation in both the operating conditions of the system (number of compressors active) and the humidity conditions of the air entering the user plant 6, the control unit 16 reacts by varying both the through-flow cross-section of the regeneration air and the duration of the drying and regeneration phases.

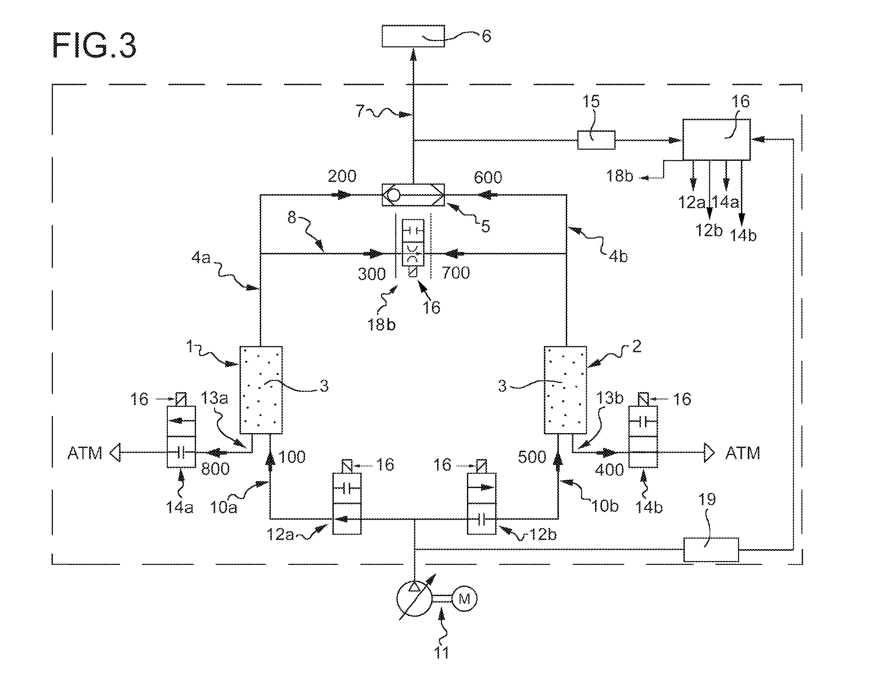

In a variation of the embodiment according to Figure 3 a compressor 11 for compressed air with a continuously variable flowrate is connected to the inlet of the drying unit. In this case, the drying unit comprises a continuously adjustable electro-valve 18b of the type known per se, arranged on the secondary line 8, while the throttle device 9 is eliminated. In this variant there is also a flowrate meter or transducer 19 situated downstream of this compressor 11. The flowrate transducer 19 measures the flowrate of air entering the drying unit and provides the control unit 16 with a signal indicating this flowrate. In this way, the control unit 16 is able to effect the gradual opening or closing of the continuously adjustable electro-valve 18b so as to modulate the regeneration air flow depending on the flowrate of incoming air. The flowrate transducer 19 may also be used in the case where the type of compressor (fixed or variable flowrate) or the number of compressors situated on the input side of the drying unit is not known.

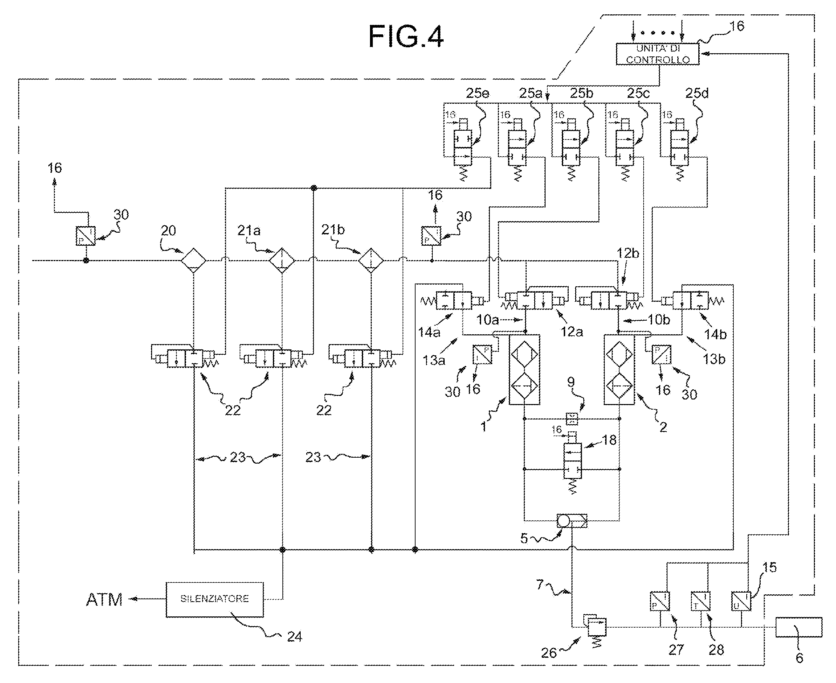

Figure 4 shows an air treatment plant comprising the variant according to Figure 2 of the drying unit in which parts corresponding to those shown in Figures 1, 2 and 3 are indicated by the same reference numbers. In this configuration the electrically operated intake and discharge valves 12a, 12b, 14a and 14b are replaced by corresponding pneumatically operated valves which in Figure 4 have been indicated by the same reference numbers 12a, 12b, 14a and 14b.

This drier has three filters 20, 21a, 21b arranged in series along the line which connects the compressor 11 to the intake valves 12a and 12b, in particular a water separator 20 and two coalescence filters 21a, 21b of varying selectivity for removal of vapours and aerosol. The water separator 20 and the coalescence filters 21a, 21b are connected, by means of respective pneumatically operated bleeder valves 22, to outlet lines 23 able to convey the vapours and the aerosols through a silencer 24 before being discharged into the external atmosphere.

The air treatment plant according to Figure 4 also comprises five driving electro-valves 25a-25e able to perform switching of the valves 12a, 12b, 14a, 14b of the columns 1 and 2 and switching of the bleeder valves 22 of the separator 20 and the filters 21a, 21b.

The control unit 16 is designed to send control signals to the driving electro-valves 25a-25e.

A minimum pressure valve 26, a pressure transducer 27 and a temperature transducer 28 are also present on the outlet line 7. The minimum pressure valve 26 is able to allow through-flow of the dried air towards the user plant 6 only when the pressure of this air exceeds a predetermined minimum value.

Figure 4 also shows another four pressure transducers 30 which are situated, respectively, on the input side of the water separator 20, on the output side of one of the two filters 21a, 21b and in the vicinity of the columns 1 and 2. The pressure transducers 27 and 30 and temperature transducer 28 are able to send signals representing respective measured values to the control unit 16 which, on the basis of these values, provides control signals to the driving electro-valves 25a-25e.

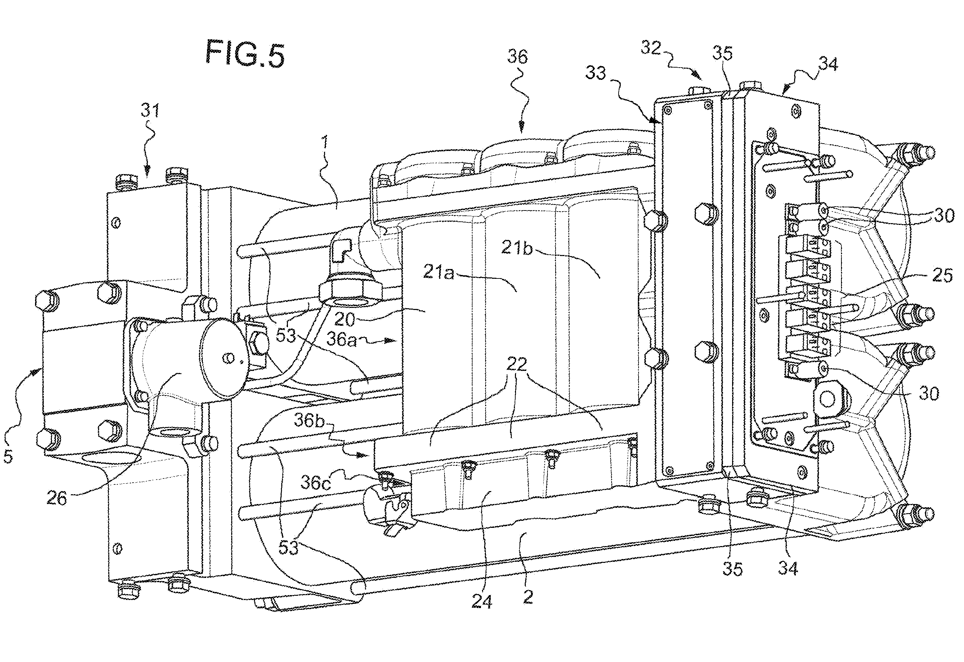

The air treatment unit described above is designed with a compact modular structure which can be easily maintained, as shown in Figure 5. In this figure, corresponding parts are indicated by the same numbers used in Figure 4.

In the example of embodiment according to Figure 5, the air treatment plant has a structure comprising two end units or modules 31 and 32 which are interconnected by means of a plurality of bars 53 which are parallel to each other. The drying columns 1 and 2 extend between these units 31 and 32.

The terminal unit 31 comprises, among other things, the selector valve 5 and the minimum pressure valve 26.

The other terminal unit 32 has a stratified structure, including a housing 33 enclosing the intake valves 12a, 12b and the associated discharge valves 14a, 14b, an end plate 34 which supports the driving electro-valves 25a-25e (generically denoted collectively by 25 in Figure 5), a number of pressure transducers 30 and at least one intermediate plate 35 provided with holes, grooves and sealing O-rings which define the connections between the valves 12a, 12b, 14a, 14b and the electro-valves 25a-25e.

The plant according to Figure 5 also comprises a further unit or module 36 also having a layer structure with a first sub-unit 36a including the filters 20, 21a, 21b, a second sub-unit 36b including the bleeder valves 22 and a third sub-unit 36c including the silencer 24.

The unit or module 36 is fixed to the structure of the drier in the vicinity of the end unit or module 32, arranged alongside the two drying columns 1 and 2.

As can be noted from Figure 5, all the main components can be easily accessed and are positioned so that they can be disassembled with a minimum number of operations.

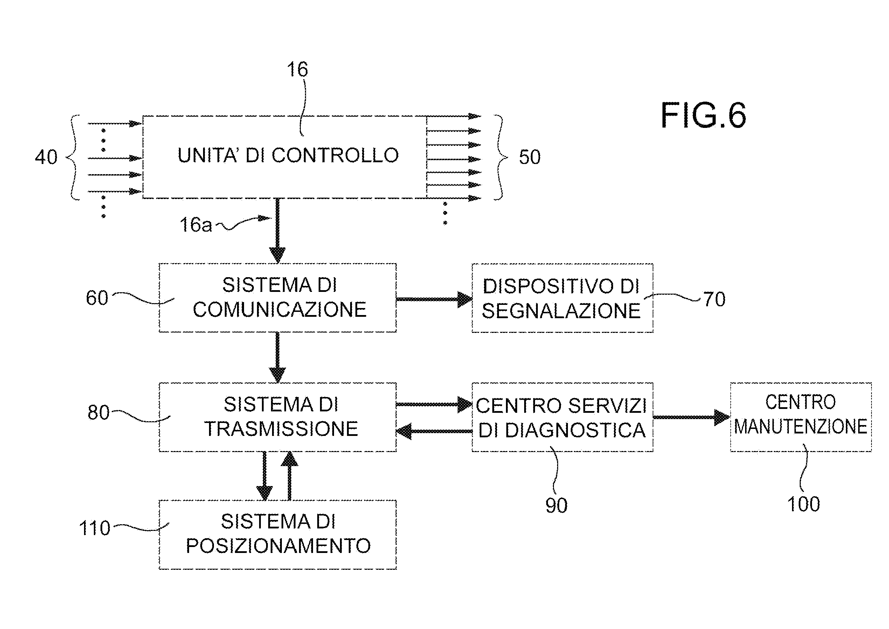

Figure 6 shows a block diagram of a predictive diagnostics system integrated with the air treatment plant for management of a railway vehicle. In this figure 40 denotes the signals or data supplied by the pressure transducers 27 and 30, by the temperature transducer 28, by the humidity transducer 15, by the flowrate transducer 19 and/or by the ON/OFF signal. These signals or data are processed by the control unit 16 which emits signals 50 which are sent to the driving electro-valves 25a-25e and to the auxiliary electro-valve 18 or to the continuous adjustment electro-valve 18b. The electronic control unit 16 is also able to send to a communications system 60 present on-board the vehicle a plurality of signals 16a - indicated in the figures by a bold arrow - indicative of the operation of the drier. Said communications system 60 is able, on the basis of said signals 16a, to send a malfunction alarm directly to a signalling device 70 for the train driver or to a transmission system 80 of the GSM-GPRS or Wi-Fi type. The transmission system 80 is able to communicate with a diagnostics services centre 90 and the latter with a maintenance centre 100. The transmission system 80, finally, is able to communicate with a tracking system 110, in particular of the GPS type, which is able to locate the vehicle on which a malfunction has occurred and therefore allows rapid intervention for maintenance purposes.

In a variant not shown in the figures, it is possible to incorporate the transmission system 80 and the tracking system 110 directly inside the control unit 16. In this way it will no longer be necessary to use the communications system 60, but the signals will be sent directly from the control unit 16 to the signalling device 70 for the train driver or to the diagnostics services centre 90.

Obviously, without modifying the principle of the invention, the embodiments and the constructional details may be greatly varied with respect to that which has been described and illustrated purely by way of a non-limiting example, without thereby departing from the scope of the invention, as defined in the accompanying claims.

## Claims

1. Adsorption drying unit including:
- an inlet for an air flow supplied from at least one compressed-air source (11);
- an outlet for connection to a pneumatic user plant (6);
- a first drying column or device (1) and a second drying column or device (2) each containing hygroscopic material (3);
- two main lines (4a,4b) each able to connect a respective drying column (1,2) to the user plant (6);
- a secondary line (8) which connects to each other the two main lines (4a,4b) and is provided with flowrate control means (9), in particular throttle means (9);
- a selector valve (5) able to connect alternately one of the said main lines (4a,4b) to the plant (6);
- an intake and discharge valve unit (12a, 12b, 14a, 14b) able to charge and discharge the two drying columns (1,2), connecting alternately said columns (1,2) to said at least one compressed-air source (11) or to the external atmosphere, respectively;
in such a way that the drying unit is able to assume alternately:
a first operating condition where the first drying column (1), connected to the source (11) by the intake and discharge valve unit (12a, 12b, 14a, 14b), is in drying mode and a part of the air which flows from said first column (1) towards the user plant (6) is conveyed along the secondary line (8) towards the second column (2) in order to regenerate the latter and flows out from the latter towards the atmosphere, and
a second operating condition in which the second column (2), connected to the source (11) by the intake and discharge valve unit (12a, 12b, 14a, 14b), is in drying mode and a part of the air which flows from said second column (2) towards the user plant (6) is conveyed via the secondary line (8) towards the first column (1) in order to regenerate the latter and then flows out towards the atmosphere;
said drying unit being **characterized in that** it also comprises:
- a humidity transducer (15) able to detect the humidity of the air leaving the drying unit and emit a signal indicating this humidity;
- a control unit (16) designed to manage, on the basis of the signal emitted by the humidity transducer (15), the intake and discharge valve unit (12a, 12b, 14a, 14b) so as to switch the drying unit from the first operating condition into the second operating condition and vice versa.

2. Drying unit according to Claim 1, in which said inlet is intended to be connected to a plurality of compressed-air sources (11',11") able to be activated selectively or jointly, and in which the control unit (16) is designed to receive an activation signal indicating which and how many sources (11',11") are active.

3. Drying unit according to Claim 1 or 2, in which a third line (17) is provided parallel to said secondary line (8) and has an auxiliary electro-valve (18) able to modulate the flow of regeneration air.

4. Drying unit according to Claim 2 or 3, in which the control unit (16) is designed to control said auxiliary valve (18) on the basis of both the humidity signal supplied by the humidity transducer (15) and the abovementioned activation signal.

5. Drying unit according to any one of the preceding claims, in which the compressed-air source (11) is of the type with a continuously variable flowrate and said flowrate control means (9) comprise a continuously adjustable electro-valve (18b).

6. Drying unit according to any one of the preceding claims, comprising moreover a flowrate meter or transducer (19) able to measure the flowrate of the air entering the drier and emit a signal indicating this flowrate.

7. Drying unit according to any one of the preceding claims, also comprising a driving valve unit (25a-25e) able to manage the intake and discharge valve unit (12a, 12b, 14a, 14b).

8. Drying unit according to any one of the preceding claims, also comprising pressure transducer means (27, 30) and temperature transducer means (28) able to measure the pressure and the temperature of the air, respectively, and emit signals indicating this pressure and temperature.

9. Air treatment plant, in particular for pneumatic braking systems for vehicles, comprising a drying unit according to one or more of the preceding claims.

10. Air treatment plant according to Claim 9, having a constructional design of the modular type, comprising a plurality of units or modules (1, 2; 31; 32; 36).

11. Air treatment plant according to Claim 10, including a first and second end unit or module (31, 32) between which said drying columns (1,2) extend; the first unit or module (31) including the selector valve (5); the second unit or module (32) including the intake and discharge valve unit (12a, 12b, 14a, 14b).

12. Air treatment plant according to Claim 11, in which said first unit or module (31) also includes a minimum pressure valve (26) able to allow the dried air flow towards the user plant (6) only when the pressure of this air exceeds a predetermined minimum value.

13. Air treatment plant according to Claim 11 or 12, comprising a drying unit according to Claim 7, in which the second unit or module (32) has a stratified structure, including:
- a housing (33) enclosing the intake and discharge valve unit (12a, 12b, 14a, 14b);
- an end plate (34) which supports the driving valve unit (25a-25e); and
- at least one intermediate plate (35) which defines the connections between the intake and discharge valve unit (12a, 12b, 14a, 14b) and the driving valve unit (25a-25e).

14. Drying plant according to any one of Claims 10 to 13, comprising a drying unit according to Claim 7 and comprising a further unit or module (36) having a layer structure with a first sub-unit (36a) including filters (20, 21a, 21b) for the air introduced into the drying unit, a second sub-unit (36b) including a bleeder valve unit (22) associated with said filters (20, 21a, 21b) and managed by the driving valve unit (25a-25e) and a third sub-unit (36c) including a silencer (24).

15. Air treatment plant according to Claim 14, in which said further unit or module (36) is fixed in the vicinity of the second end unit or module (32), arranged alongside the drying columns (1,2).

16. Air treatment plant according to any one of Claims 9 to 15, having, also associated therewith, a communications system (60), a signalling device (70) and a data transmission system (80), in which the communications system (60) is able to receive a plurality of signals (16a) from the control unit (16) and send a malfunction alarm to the signalling device (70) and the data transmission system (80) is able to communicate with a remote diagnostics service centre (90).
